# DEMANDE DE BREVET EUROPEEN

(11) **EP 3 113 300 A1**
(43) Date de publication de la demande: **04.01.2017**
(21) Numéro de dépôt: 16177151.4
(22) Date de dépôt: 30.06.2016
(51) Int. Cl.: H01R 43/048, H01R 13/622

(54) **CONNECTEUR COMPRENANT UNE BAGUE DE VERROUILLAGE SERTIE ET PROCÉDÉ DE SERTISSAGE D'UNE TELLE BAGUE DE VERROUILLAGE**

(30) Priorité: 30.06.2015 FR 1556150
(71) Demandeur: SOURIAU, 78000 Versailles Cedex (FR)
(72) Inventeur: SECLET, Guillaume, 72160 Connerré (FR)
(74) Mandataire: Ipside

(57) **Abrégé**

L'invention concerne un connecteur comprenant une bague de verrouillage sertie, et comprenant un corps de fiche (10), une bague de verrouillage (11) sertie entourant ledit corps de fiche (10). Ledit connecteur comporte deux demi-rondelles de galetage (15) positionnées dans une gorge du corps de fiche (10), et comprenant une gorge sur leur surface cylindrique extérieure, la gorge des demi-rondelles de galetage coopère avec un galet de forme complémentaire à celle de la gorge pour sertir la bague de verrouillage..

## Description

### DOMAINE TECHNIQUE DE L'INVENTION

La présente invention concerne un connecteur comprenant une bague de verrouillage sertie et un procédé de sertissage d'une telle bague de verrouillage. Elle s'applique, en particulier, au sertissage d'une bague de verrouillage sur un corps de fiche d'un connecteur.

### ETAT DE LA TECHNIQUE

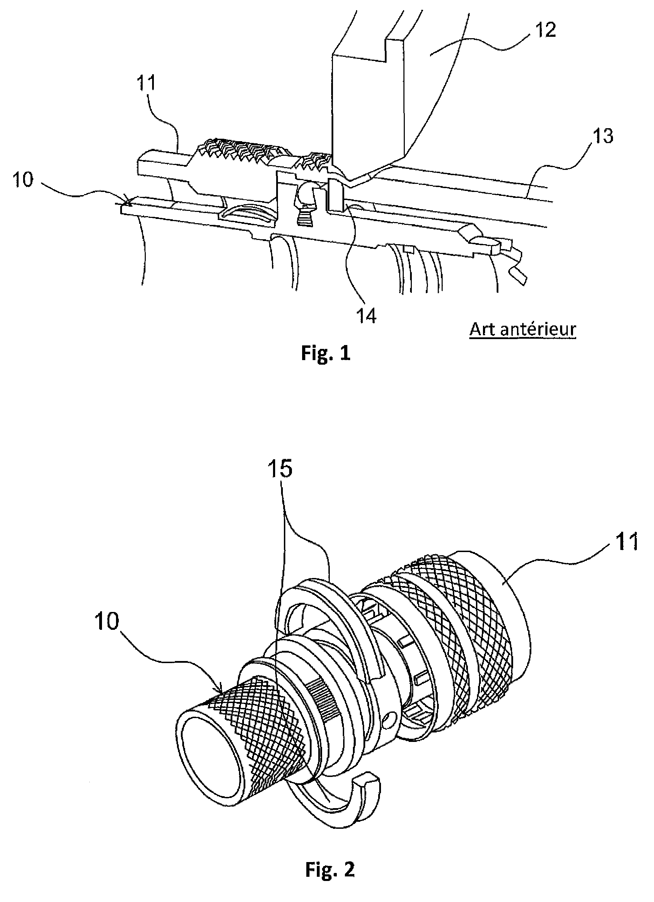

La figure 1, relative à l'art antérieur représente le sertissage d'une bague de verrouillage 11 sur un corps de fiche. Le sertissage est obtenu par la déformation plastique de l'extrémité de ladite bague, au cours d'une opération similaire à un galetage, au moyen d'un galet 12, agissant comme un poinçon, et d'un outillage en deux parties 14, 11 agissant comme une matrice, l'une des deux parties 14, dite rondelle de galetage restant prisonnière entre la bague de verrouillage et le corps de fiche 10 après l'opération de sertissage.

L'assemblage de la bague de verrouillage 11 se fait selon les étapes suivantes :
- positionnement de la rondelle de galetage monobloc 14 sur le corps de fiche en appui sur un épaulement,
- glissement de l'outil standard 13 jusqu'à la rondelle de galetage 14,
- application du galet 12 en surface de la bague de verrouillage 11
- mise en rotation de la pièce en déplaçant le galet vers l'axe de rotation de la pièce jusqu'à une butée mécanique

Toutefois, certains corps de fiches possèdent un raccord intégré qui ont la particularité d'avoir une partie arrière plus importante. Dans ce cas, un outil standard, tel que décrit précédemment, est impossible à mettre en oeuvre pour sertir la bague de verrouillage en raison de la configuration du corps de fiche puisque la rondelle de galetage monobloc ne peut plus être introduite par l'arrière. De plus, l'utilisation de l'outil standard entraine un risque de détérioration sur un certains nombre de pièces (par exemple : mauvaise calibration de l'outil standard). Il en résulte des rebuts lors de la production.

### OBJET DE L'INVENTION

L'invention vise à remédier à ces inconvénients.

A cet effet, selon un premier aspect, la présente invention vise un connecteur comportant une bague de verrouillage sertie, et comprenant :
- un corps de fiche,
- une bague de verrouillage sertie entourant ledit corps de fiche,
- deux demi-rondelles de galetage positionnées dans une gorge du corps de fiche, et comprenant une gorge sur leur surface cylindrique extérieure, la gorge des demi-rondelles de galetage coopère avec un galet de forme complémentaire à celle de la gorge pour sertir la bague de verrouillage.

Grâce à ces dispositions, il est possible de sertir un connecteur possédant un raccord intégré, ce qui est impossible selon la technique de l'art antérieur.

La gorge se trouve sur la surface cylindrique extérieure de chaque demi-rondelle (c'est-à-dire la paroi extérieur).

Le fait de supprimer l'outil de sertissage permet de réduire les rebuts. Selon un deuxième aspect, l'invention concerne un procédé de sertissage d'une bague de verrouillage, sur le connecteur objet de l'invention, lequel procédé comprenant les étapes suivantes :
- positionnement dans une gorge du corps de fiche des deux demi-rondelles de galetage, dont la surface cylindrique extérieure comporte une gorge,
- glissement de la bague de verrouillage jusqu'en butée du corps de fiche au dessus des demi-rondelles de galetage,
- sertissage de la bague de verrouillage par un galet déformant l'extrémité de ladite bague dans la gorge des demi-rondelles de galetage
- maintien des deux demi-rondelles de galetage (15) par assemblage de chaque extrémité des demi-rondelles de galetage (15) par un élément de maintien.

Dans un mode de réalisation, la bague de verrouillage est insérée par l'avant du corps de fiche.

Dans un mode de réalisation, la bague de verrouillage est insérée par l'arrière du corps de fiche.

Dans un mode de réalisation, le procédé comporte une étape de maintien des deux demi-rondelles de galetage par assemblage de chaque extrémité des demi-rondelles de galetage.

### BREVE DESCRIPTION DES FIGURES

D'autres avantages, buts et caractéristiques de la présente invention ressortent de la description qui suit faite, dans un but explicatif et nullement limitatif, en regard des dessins annexés, dans lesquels :
- la figure 1, (relative à l'art antérieur), représente un schéma de montage d'une rondelle de verrouillage selon une coupe transversale,
- la figure 2 représente une vue éclatée d'un montage avec deux moitiés de rondelle galetage selon un mode de réalisation particulier du connecteur objet de la présente invention,
- la figure 3 montre un schéma de montage selon une coupe transversale au moment du sertissage de la bague de verrouillage selon un mode de réalisation particulier du connecteur objet de la présente invention,
- la figure 4 représente, sous forme de logigramme, des étapes mises en oeuvre dans un mode de réalisation particulier du procédé objet de la présente invention,
- la figure 5 représente un schéma d'une étape de montage avant l'assemblage des deux demi-rondelles de galetage,
- la figure 6 représente un schéma d'une étape de montage après l'assemblage des deux demi-rondelles de galetage.

### DESCRIPTION D'EXEMPLES DE REALISATION DE L'INVENTION

La figure 2 représente une vue éclatée d'un montage avec deux moitiés de rondelle galetage 15.

Il est montré un corps de fiche 10 comprenant une gorge dans lequel sont positionnées les deux demi-rondelles de galetage 15. Chaque moitié de rondelle est positionnée dans une gorge du corps de fiche 10. Le dégagement permet de maintenir les deux moitiés de rondelles 15 concentriques par rapport à l'axe du corps de fiche 10. La bague de verrouillage est positionnée autour du corps de fiche 10.

Le terme « gorge » désigne une saignée cylindrique s'étendant sur toute la circonférence d'une surface cylindrique.

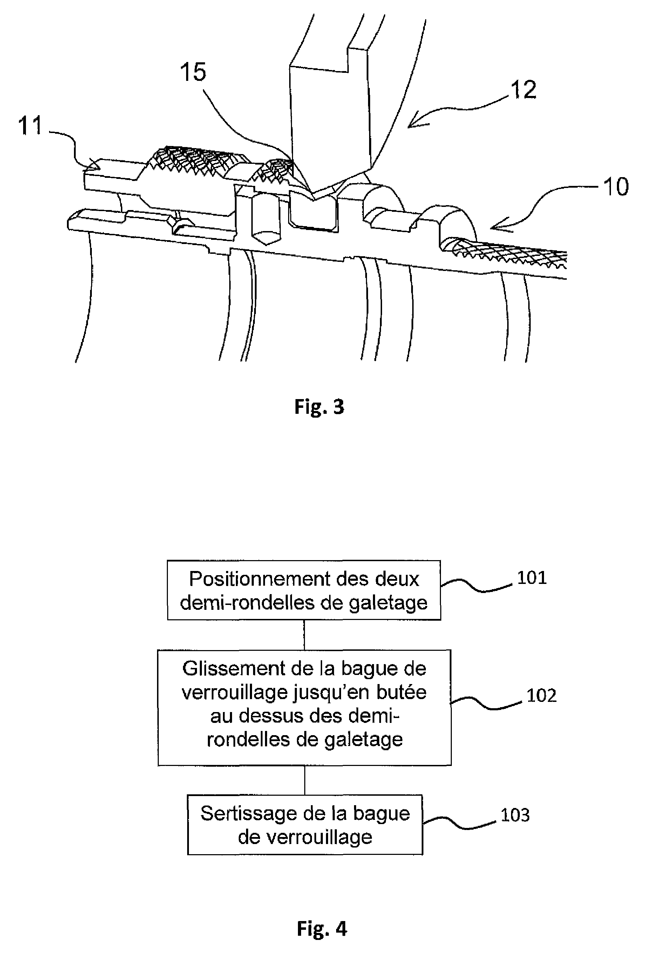

La figure 3 montre un schéma de montage au moment du sertissage de la bague de verrouillage 15.

Il est montré un corps de fiche 10, un galet 12 pour le sertissage de la bague de verrouillage 11, une moitié de rondelle galetage 15.

Chaque moitié de rondelle de galetage 15 comporte une gorge dans laquelle apte à coopérer avec le galet 12 pour sertir la bague de verrouillage 11.

La gorge des demi-rondelles de galetage 15 est, par exemple, en forme de U, de V ou de W sans que ces exemples ne soient limitatifs et opère vis-à-vis de la déformation plastique de la bague de verrouillage comme une matrice. Le galet 12 est de forme complémentaire à celle de la gorge de la rondelle de galetage et coopère avec celle-ci pour imprimer, par déformation plastique, ce profil dans la bague de verrouillage 11. Les demi-rondelles de galetage restent prisonnières du connecteur après l'opération de sertissage. Les demi-rondelles de galetage servent de guide pour l'opération de sertissage.

La figure 4 représente sous forme de logigramme l'assemblage de la bague de verrouillage 15 :
- selon une étape 101 de positionnement, les deux demi-rondelles de galetage 15 sont positionnées dans une gorge du corps de fiche,
- selon une étape 102 de pré-assemblage, la bague de verrouillage est glissée sur le corps de fiche jusqu'en butée, au dessus des demi-rondelles de galetage 15,
- selon une étape 103 de sertissage, la portion de la bague de verrouillage 11 se trouvant au-dessus des demi-rondelles de galetage est déformée dans la gorge des demi-rondelles de galetage (15).

La bague de verrouillage 11 est insérée par l'avant du corps de fiche 10. La notion d'insertion par l'avant est déterminée par le fait que la face avnt est la face accouplement avec le connecteur antagoniste appelé embase caractérisée par la présence d'éléments de détrompage et de contacts électriques.

Dans un autre exemple, la bague de verrouillage est insérée par la face arrière. La face arrière étant défini comme l'opposée de la face avant.

Selon un exemple de réalisation, le corps de fiche comporte un moletage sur la partie arrière.

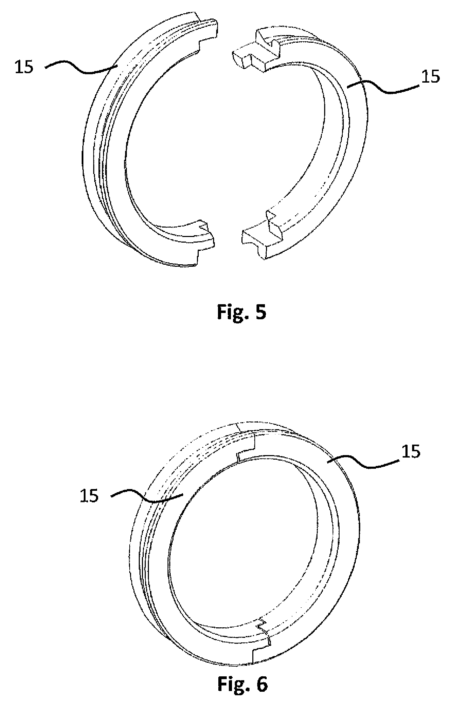

La figure 5 représente une étape de pré assemblage des deux demi-rondelles de galetage 15. Dans cet exemple de réalisation, chaque demi-rondelle de galetage 15 possède un élément de maintien.

Dans l'exemple représenté, une demi-rondelle de galetage 15 possède une protubérance mâle (comme un appendice) et l'autre demi-rondelle de galetage 15 possède une protubérance femelle.

La figure 6 représente l'assemblage des deux demi-rondelles de galetage 15. Il est visible le fait que l'assemblage permet de maintenir en position les deux demi-rondelles de galetage 15 en formant un centrage tout en évitant un glissement d'une demi rondelle par rapport à l'autre.

Dans un autre exemple, les deux demi-rondelles de galetage 15 sont assemblées par un élément magnétique positionné au niveau de chaque extrémité des demi-rondelles de galetage.

Dans un autre exemple, les deux demi-rondelles de galetage 15 sont assemblées par clipsage.

L'assemblage des deux demi-rondelles est réalisé par toutes types d'élément qui assure le centrage demi-rondelle de galetage 15 par rapport à l'autre.

### NOMENCLATURE

- 10: corps de fiche
- 11: bague de verrouillage
- 12: galet
- 13: outil de maintien
- 14: rondelle de galetage
- 15: demi rondelle de galetage

## Revendications

1. Connecteur comprenant une bague de verrouillage sertie, et comprenant :
- un corps de fiche (10),
- une bague de verrouillage (11) sertie entourant ledit corps de fiche (10),
**caractérisé en ce que** :
- ledit connecteur comporte deux demi-rondelles de galetage (15) positionnées dans une gorge du corps de fiche (10), comprenant une gorge sur leur surface cylindrique extérieure, la gorge des demi-rondelles de galetage coopère avec un galet de forme complémentaire à celle de la gorge pour sertir la bague de verrouillage.

2. Procédé de sertissage de la bague de verrouillage d'un connecteur selon la revendication 1, **caractérisé en ce qu'**il comprend les étapes suivantes :
- positionnement dans une gorge du corps de fiche (10) des deux demi-rondelles de galetage (15), dont la surface cylindrique extérieure comporte une gorge,
- glissement de la bague de verrouillage (11) jusqu'en butée du corps de fiche (10) au dessus des demi-rondelles de galetage (15),
- sertissage de la bague de verrouillage (11) par un galet (12) pour déformant l'extrémité de ladite bague de verrouillage (11) dans la gorge des demi-rondelles de galetage (15),
- maintien des deux demi-rondelles de galetage (15) par assemblage de chaque extrémité des demi-rondelles de galetage (15) par un élément de maintien.

3. Procédé selon la revendication 2, dans lequel la bague de verrouillage est insérée par l'avant du corps de fiche (10).

4. Procédé selon la revendication 2, dans lequel la bague de verrouillage est insérée par l'arrière du corps de fiche (10).
